# EUROPÄISCHE PATENTSCHRIFT

(11) **EP 3 809 379 B1**
(45) Veröffentlichungstag und Bekanntmachung des Hinweises auf die Patenterteilung: **31.05.2023**
(21) Anmeldenummer: 20194657.1
(22) Anmeldetag: 04.09.2020
(51) Int. Cl.: G06Q 20/12, G07F 17/24, G06Q 30/02, G08G 1/14

(54) **PARKSYSTEM FÜR EINE PARKVORRICHTUNG**
PARKING SYSTEM FOR A PARKING DEVICE
SYSTÈME DE STATIONNEMENT POUR UN DISPOSITIF DE STATIONNEMENT

(30) Priorität: 15.10.2019 DE 102019127651
(43) Veröffentlichungstag der Anmeldung: 21.04.2021
(73) Patentinhaber: Scheidt & Bachmann GmbH, 41238 Mönchengladbach (DE)
(72) Erfinder: MILLER, Dr. Norbert, 41063 Mönchengladbach (DE); RÜTTEN, Konrad, 52525 Heinsberg (DE); NOLL, Elmar, 41068 Mönchengladbach (DE)
(74) Vertreter: Cohausz & Florack

(56) Entgegenhaltungen:
- EP-A1- 1 376 491
- CN-A- 109 246 599
- US-B1- 6 771 185

## Beschreibung

Die Anmeldung betrifft ein Parksystem mit mindestens einer Zugangsanordnung. Darüber hinaus betrifft die Anmeldung ein Verfahren zum Betreiben eines Parksystems und eine Parktarifsteuerungseinrichtung.

Ein Parksystem für mindestens eine Parkvorrichtung, wie Parkplätze, Parkhäuser und dergleichen, verfügt in der Regel über eine oder mehrere Zugangsanordnung/en. Eine Zugangsanordnung umfasst im Allgemeinen eine oder mehrere Zugangsvorrichtung/en. Beispielsweise kann als Zugangsvorrichtung eine Schranke mit einem schwenkbaren Schrankenbaum vorgesehen sein. Mit einer derartigen Zugangsvorrichtung wird insbesondere das Durchfahren eines Fahrzeugs von einem ersten Bereich in einen weiteren Bereich kontrolliert bzw. gesteuert.

So kann bei einem Parksystem eine Zugangsanordnung mit mindestens einer Zugangsvorrichtung vorgesehen sein, um das Durchfahren von einem nicht kontrollierten Bereich in einen kontrollierten Bereich, beispielsweise den Parkbereich, zu steuern. Mit anderen Worten kann das Einfahren in die Parkvorrichtung durch eine Zugangsvorrichtung gesteuert werden. Alternativ oder zusätzlich kann bei einem Parksystem eine Zugangsanordnung mit mindestens einer Zugangsvorrichtung vorgesehen sein, um das Durchfahren eines Fahrzeugs von dem kontrollierten Bereich in den nicht kontrollierten Bereich zu steuern. Mit anderen Worten kann das Ausfahren aus der Parkvorrichtung durch eine Zugangsvorrichtung gesteuert werden.

Bei bekannten Zugangsvorrichtungen wird ein Einfahren in eine Parkvorrichtung gewährt, beispielsweise nach der Erstellung eines Tickets durch ein Kontrollgerät der Zugangsanordnung aufgrund einer Nutzeraktion. Das Ticket, insbesondere ein Papierticket, wird dann nach Ende einer Parkzeit von einem Nutzer an einem Automaten bezahlt und beim Ausfahren durch eine Validatorvorrichtung einer Zugangsanordnung überprüft. Bei einer positiven Prüfung wird das Ausfahren durch die Zugangsvorrichtung der Zugangsanordnung freigegeben. Stellt die Validatorvorrichtung jedoch fest, dass das Ticket beispielsweise noch nicht bezahlt wurde, so bleibt die Zugangsvorrichtung geschlossen.

Um einem Nutzer eines Parksystems vor dem Einfahren in die Parkvorrichtung die Kosten für dessen Nutzung anzuzeigen, befindet sich in der Regel in (unmittelbarer) Nähe, also benachbart, zu der Zugangsvorrichtung, beispielsweise an dem das Ticket ausgebenden Kontrollgerät, mindestens eine erste Anzeige. Die erste Anzeige ist eingerichtet zum Anzeigen eines Parktarifdatensatzes (z.B. Kosten bzw. zu entrichtender Betrag pro Zeiteinheit und/oder dergleichen).

Es kann jedoch vorkommen, dass ein Parksystem über einen längeren Zufahrtabschnitt verfügt, der von einem Verkehrsweg abzweigt und zu der Zugangsvorrichtung führt, so dass ein Nutzer bei einem Abfahren von dem Verkehrsweg in den Zufahrtsabschnitt die erste Anzeige nicht (ausreichend) wahrnehmen kann. Hierbei besteht jedoch für einen Nutzer nach dem Abfahren in den Zufahrtabschnitt häufig keine Möglichkeit mehr, diese Entscheidung rückgängig zu machen. Anders ausgedrückt ist ein Wenden des Fahrzeugs oder dergleichen durch den Nutzer nach einem Abfahren in den Zufahrtsabschnitt nicht oder nur mit sehr hohem Aufwand möglich, so dass der Nutzer nach einem Abfahren in den Zufahrtsabschnitt auch die Zugangsvorrichtung passieren muss. Mit anderen Worten: Die Zufahrt zu einem Parkhaus ist häufig so gestaltet, dass - sobald der Nutzer in die Zufahrt abgebogen ist -, er auch in das Parkhaus einfahren muss.

Um den Nutzer bereits vor einem Abfahren in einen Zufahrtsabschnitt über den Parktarifdatensatz der Parkvorrichtung zu informieren, ist es bekannt, mindestens eine zweite Anzeige zum Anzeigen des Parktarifdatensatzes an dem Zufahrtsabschnitt anzuordnen, insbesondere an einem Beginn des Zufahrtsabschnitts und damit entfernt von der ersten Anzeige bzw. der Zugangsvorrichtung. Mittels der zweiten Anzeige kann sich der Nutzer über den Parktarif informieren, bevor er in den Zufahrtsabschnitt abbiegt.

In der Regel zeigen die erste Anzeige und die zweite Anzeige den gleichen Parktarifdatensatz an.

Bei neueren Parksystemen werden vermehrt dynamische Tarifierungsverfahren eingesetzt, bei denen ein Parktarifparameter, wie ein Preis pro Zeiteinheit, während des laufenden Betriebs geändert werden kann. Insbesondere kann bei bekannten Parksystemen eine Parktarifsteuerungseinrichtung vorgesehen sein. Diese kann eingerichtet sein zum Ansteuern der mindestens einen ersten Anzeige und der mindestens einen zweiten Anzeige bei einer Anforderung zur Änderung mindestens eines Parktarifparameters, derart, dass ein Anzeigen des geänderten Parktarifdatensatzes durch die mindestens eine erste Anzeige und die mindestens eine zweite Anzeige bewirkt wird. Wenn also der Parktarif geändert werden soll, dann bewirkt die Parktarifsteuerungseinrichtung eine Änderung des angezeigten Parktarifdatensatzes.

Problematisch bei bekannten Parksystemen mit dynamischer Tarifierung und zumindest einer ersten Anzeige und einer zweiten Anzeige ist jedoch, dass ein Nutzer sich für das Einfahren in einen Zufahrtsabschnitt aufgrund eines an der zweiten Anzeige angezeigten Parktarifdatensatz entschieden hat. Insbesondere bei längeren Zufahrtsabschnitten kann es bei einer dynamischen Tarifierung dazu kommen, dass sich mindestens ein Parktarifparameter während der Fahrt des Nutzers über den Zufahrtsabschnitt ändert, beispielsweise erhöht. In diesem Fall kann dann an der ersten Anzeige im Vergleich zu dem beim Einfahren in den Zufahrtsabschnitt an der zweiten Anzeige angezeigten Parktarifdatensatz ein geänderter Parktarifdatensatz angezeigt werden, insbesondere mit erhöhten Kosten. Dies kann dazu führen, dass der Nutzer nicht mehr in die Parkvorrichtung einfahren möchte.

Darüber hinaus offenbart die Druckschrift EP 1 376 491 ein Parksystem, umfassend eine Zugangsanordnung mit einer Zugangsvorrichtung, wobei eine Anzeige benachbart zu der Zugangsvorrichtung angeordnet ist. Eine weitere Anzeige kann von dieser Zugangsvorrichtung entfernt angeordnet sein. Über einen zentralen Computer können an die Anzeigen Informationen übermittelt werden, die von Interesse für einen Nutzer sein können, der in die Parkvorrichtung einfährt oder aus dieser herausfährt.

Daher liegt der Anmeldung die Aufgabe zugrunde, ein Parksystem mit dynamischer Tarifierung bereitzustellen, bei dem die oben beschriebenen Nachteile zumindest reduziert sind und insbesondere der Nutzerkomfort in einfacher Weise verbessert wird.

Die Aufgabe wird gemäß einem ersten Aspekt der Anmeldung gelöst durch ein Parksystem nach Anspruch 1. Das Parksystem umfasst mindestens eine Zugangsanordnung mit mindestens einer Zugangsvorrichtung, eingerichtet zur Kontrolle eines Durchfahrens von einem ersten Bereich mit einem Zufahrtsabschnitt in einen weiteren Bereich. Das Parksystem umfasst mindestens eine erste, benachbart zu der mindestens einen Zugangsvorrichtung angeordnete Anzeige, eingerichtet zum Anzeigen eines Parktarifdatensatzes. Das Parksystem umfasst mindestens eine zweite, entfernt von der mindestens einen Zugangsvorrichtung und an dem Zufahrtsabschnitt angeordnete Anzeige, eingerichtet zum Anzeigen des Parktarifdatensatzes. Das Parksystem umfasst mindestens eine Parktarifsteuerungseinrichtung, eingerichtet zum Ansteuern der mindestens einen ersten Anzeige und der mindestens einen zweiten Anzeige bei einer Anforderung zur Änderung mindestens eines Parktarifparameters, derart, dass ein Anzeigen des geänderten Parktarifdatensatzes durch die mindestens eine erste Anzeige und die mindestens eine zweite Anzeige bewirkt wird. Das Parksystem umfasst mindestens ein Verzögerungsmodul, eingerichtet zum Verzögern des Anzeigens des geänderten Parktarifdatensatzes durch die mindestens eine erste Anzeige im Vergleich zu dem Anzeigen des geänderten Parktarifdatensatzes durch die mindestens eine zweite Anzeige um eine Verzögerungszeitdauer, wobei die Verzögerungszeitdauer größer null ist, wenn die Änderung des mindestens einen Parktarifparameters eine Erhöhung eines Parktarifs bewirkt und/oder die Verzögerungszeitdauer gleich null ist, wenn die Änderung des mindestens einen Parktarifparameters eine Senkung eines Parktarifs bewirkt.

Indem im Gegensatz zum Stand der Technik anmeldungsgemäß ein Parksystem mit dynamischer Tarifierung bereitgestellt wird, bei dem das Anzeigen einer angeforderten Tarifänderung an der benachbart zur Zugangsvorrichtung angeordneten ersten Anzeige durch ein anmeldungsgemäßes Verzögerungsmodul verzögert wird im Vergleich zu der Anzeige der Tarifänderung an der entfernt von der Zugangsvorrichtung angeordneten zweiten Anzeige, wird der Nutzerkomfort in einfacher Weise verbessert. Insbesondere wird es anmeldungsgemäß ermöglicht, dass ein Nutzer, der sich für das Einfahren in einen Zufahrtabschnitt und damit in eine sich anschließende Parkvorrichtung aufgrund eines auf der zweiten Anzeige angezeigten Parktarifdatensatzes entscheidet, die Parkvorrichtung auch bei einer während der Fahrt über den Zufahrtsabschnitt angeforderten Änderung mindestens eines Parktarifparameters mit demjenigen Parktarifdatensatz nutzen kann, der Grundlage seiner Entscheidung war.

Das anmeldungsgemäße Parksystem für eine Parkvorrichtung, wie ein Parkplatz, Parkhaus oder dergleichen, verfügt über eine oder mehrere Zugangsanordnung/en. Eine Zugangsanordnung umfasst eine oder mehrere Zugangsvorrichtung/en. Vorzugsweise kann als Zugangsvorrichtung eine Schranke mit mindestens einem an einer Säule schwenkbar angeordneten Schrankenbaum vorgesehen sein.

Vor einer Zugangsvorrichtung (in Durchfahrtsrichtung gesehen) ist ein erster Bereich vorgesehen, der insbesondere von einem Zufahrabschnitt gebildet ist, den ein Fahrzeug, welches durch die Zugangsvorrichtung fahren wird, zuvor passieren muss. Der Zufahrtsabschnitt meint vorliegend insbesondere den Wegabschnitt zwischen einer Abfahrt von einem (öffentlichen) Verkehrsweg, wie eine Straße, zu der Parkvorrichtung (insbesondere ohne eine weitere Abzweigung oder dergleichen an dem Zufahrtsabschnitt).

Mit der mindestens einen Zugangsvorrichtung wird das Durchfahren eines Fahrzeugs von einem ersten Bereich, insbesondere von dem Zufahrtsabschnitt, in einen weiteren Bereich kontrolliert bzw. gesteuert. Beispielsweise ist bei einer Parkvorrichtung mindestens eine Zugangsanordnung mit mindestens einer Zugangsvorrichtung vorgesehen, um das Durchfahren von einem nicht kontrollierten Bereich in einen kontrollierten Bereich, beispielsweise den Parkbereich der Parkvorrichtung, zu steuern. Mit anderen Worten kann das Einfahren in die Parkvorrichtung durch die mindestens eine Zugangsvorrichtung gesteuert werden.

Alternativ oder zusätzlich kann bei der Parkvorrichtung mindestens eine Zugangsanordnung mit mindestens einer Zugangsvorrichtung vorgesehen sein, um das Durchfahren von dem kontrollierten Bereich in den nicht kontrollierten Bereich zu steuern. Mit anderen Worten kann das Ausfahren aus der Parkvorrichtung durch die mindestens eine Zugangsvorrichtung gesteuert werden.

Das Parksystem umfasst ferner mindestens eine erste Anzeige, die benachbart zu der Zugangsvorrichtung angeordnet ist. Insbesondere ist die erste Anzeige eine stationäre Anzeige.

Eine Anzeige ist vorliegend insbesondere eine Anzeige mit variablem Inhalt, wie z.B. eine elektronische Anzeige ("Display"). Eine Anzeige ist eingerichtet zum Anzeigen eines Parktarifdatensatzes. Ein Parktarifdatensatz kann mindestens einen änderbaren Parktarifparameter enthalten. Beispielsweise kann als Parktarifdatensatz zumindest angezeigt werden, welcher Betrag bzw. Preis für die Nutzung der Parkvorrichtung für eine bestimmte Zeiteinheit zu entrichten ist. Es versteht sich, dass weitere Informationen, wie Anzahl der freien Parkplätze, Öffnungszeiten etc. auf einer Anzeige anzeigbar sein können.

Eine benachbarte Anordnung einer ersten Anzeige zu einer Zugangsvorrichtung meint insbesondere, dass die erste Anzeige für einen Nutzer, der mit seinem Fahrzeug (unmittelbar) vor der Zugangsvorrichtung (in Durchfahrtsrichtung gesehen) steht, sichtbar ist (und dass insbesondere der angezeigte Tarifdatensatz für den Nutzer lesbar ist). Insbesondere meint benachbart, dass die erste Anzeige eine maximale Distanz zu der Zugangsvorrichtung von 5 m aufweist, vorzugsweise von 2 m. Bevorzugt kann die Zugangsanordnung neben der Zugangsvorrichtung die mindestens eine erste Anzeige umfassen.

Darüber hinaus kann die Zugangsanordnung ein (herkömmliches) Kontrollgerät umfassen (z.B. zum Ausgeben von Tickets und/oder zum Steuern des Öffnens einer Zugangsvorrichtung). Das Kontrollgerät kann beispielsweise auf Anforderung ein Ticket entsprechend einem augenblicklich gültigen Parktarifdatensatz ausgeben.

Hierbei entspricht anmeldungsgemäß der augenblicklich gültige Parktarifdatensatz dem Parktarifdatensatz, der augenblicklich auf der ersten Anzeige angezeigt wird (nicht unbedingt dem Parktarifdatensatz, der auf der zweiten Anzeige angezeigt wird).

Bei einer Ausführungsform kann ein Kontrollgerät beispielsweise die mindestens eine erste Anzeige aufweisen. Es versteht sich, dass mindestens eine weitere erste Anzeige vorgesehen und/oder eine erste Anzeige mit dem Kontrollgerät beispielsweise kommunikativ gekoppelt sein kann.

Das Parksystem umfasst ferner mindestens eine zweite Anzeige. Die zweite Anzeige ist entfernt von der Zugangsvorrichtung angeordnet. Entfernt meint insbesondere, dass eine Distanz zwischen der zweiten Anzeige und der Zugangsvorrichtung liegt, die größer ist als die Distanz zwischen der ersten Anzeige und der Zugangsvorrichtung. Die Minimaldistanz zwischen der zweiten Anzeige und der Zugangsvorrichtung beträgt insbesondere 6 m, bevorzugt 10 m, insbesondere bevorzugt 15 m.

Die zweite Anzeige ist insbesondere eine stationäre Anzeige, die an dem Zufahrtsabschnitt, vorzugsweise am Beginn des Zufahrtsabschnitts, angeordnet ist. Insbesondere kann die mindestens eine zweite Anzeige derart angeordnet sein, dass die zweite Anzeige für einen Nutzer, der mit seinem Fahrzeug von einem Verkehrsweg (unmittelbar) in den Zufahrtsabschnitt einfahren wird, sichtbar ist (und dass insbesondere der angezeigte Tarifdatensatz für den Nutzer lesbar ist).

Die zweite Anzeige ist (ähnlich wie die erste Anzeige) zum Anzeigen eines Parktarifdatensatzes eingerichtet.

Ferner umfasst das Parksystem mindestens eine Parktarifsteuerungseinrichtung. Die Parktarifsteuerungseinrichtung kann beispielsweise eine lokale Einrichtung der Parkvorrichtung sein (z.B. in einem Zellencomputer, Kontrollgerät und/oder dergleichen implementiert sein) und/oder eine entfernt von der Parkvorrichtung angeordnete Einrichtung sein (z.B. in einem Backendsystem implementiert sein). Wenn die Parktarifsteuerungseinrichtung aus mehreren Modulen gebildet ist, können die Module verteilt angeordnet sein.

Die Parktarifsteuerungseinrichtung ist insbesondere kommunikativ mit der ersten Anzeige und der zweiten Anzeige (zumindest temporär) gekoppelt. Bei einer Anforderung zur Änderung mindestens eines Parktarifparameters (z.B. Betrag und/oder Zeiteinheit) steuert die Parktarifsteuerungseinrichtung zumindest die mindestens eine erste Anzeige und die mindestens eine zweite Anzeige an, um eine Änderung des jeweils angezeigten Parktarifdatensatzes (entsprechend dem mindestens einen geänderten Parktarifparameter) zu bewirken. Eine Anforderung löst insbesondere die beschriebene Ansteuerung und eine Änderung des für die Nutzung der Parkvorrichtung gültigen Parktarifdatensatzes aus.

Anmeldungsgemäß umfasst das Parksystem mindestens ein Verzögerungsmodul. Vorzugsweise kann die Parktarifsteuerungseinrichtung das Verzögerungsmodul aufweisen. Beispielsweise kann das Verzögerungsmodul einer Parktarifsteuerungseinrichtung das Ansteuern der ersten Anzeige gegenüber dem Ansteuern der zweiten Anzeige verzögern. Insbesondere kann bei Detektion einer Anforderung zur Änderung eines Tarifdatenparameters die zweite Anzeige unmittelbar und die erste Anzeige verzögert angesteuert werden. Die erste und zweite Anzeige sind bei dieser Ausführungsform eingerichtet, bei Erhalt eines Ansteuersignals (umfassend beispielsweise einen geänderten Parktarifdatensatz) den geänderten Parktarifdatensatz unmittelbar anzuzeigen.

Denkbar ist auch, dass die mindestens eine erste Anzeige das mindestens eine Verzögerungsmodul aufweist. Beispielsweise bei Erhalt eines Ansteuersignals (umfassend beispielsweise einen geänderten Parktarifdatensatz) von der Parktarifsteuerungseinrichtung kann das Verzögerungsmodul der ersten Anzeige das Anzeigen des geänderten Parktarifdatensatzes verzögern (während die mindestens eine zweite Anzeige bei Erhalt eines Ansteuersignals (umfassend beispielsweise einen geänderten Parktarifdatensatz) den geänderten Parktarifdatensatz unmittelbar anzeigt.

Das Verzögerungsmodul bewirkt ein verzögertes Anzeigen des geänderten Parktarifdatensatzes durch die mindestens eine erste Anzeige im Vergleich zu dem Anzeigen des geänderten Parktarifdatensatzes durch die mindestens eine zweite Anzeige um eine (konfigurierbare) Verzögerungszeitdauer. Die Verzögerungszeitdauer kann so gewählt sein, dass für einen Nutzer beim Erreichen der Einfahrt zumindest kein schlechterer Parktarifdatensatz zur Anwendung kommt als derjenige, der seiner Entscheidung, hier und jetzt zu parken, zugrunde lag (d.h. der Parktarifdatensatz, der an der zweiten Anzeige angezeigt wurde, als der Nutzer auf den Zufahrstabschnitt abgebogen ist).

Wie oben ausgeführt wurde, entspricht (im fehlerfreien Betrieb) der augenblicklich gültige Parktarifdatensatz der Parkvorrichtung (der Grundlage einer Ticketgenerierung und eines anschließenden Abrechnungsvorgangs ist) dem Parktarifdatensatz, der augenblicklich auf der ersten Anzeige angezeigt wird.

Gemäß einer ersten Ausführungsform des anmeldungsgemäßen Parksystems kann die Verzögerungszeitdauer abhängen von der Auswirkung des geänderten Parktarifparameters: Die Verzögerungszeitdauer ist größer null, wenn die Änderung des mindestens einen Parktarifparameters eine Erhöhung eines Parktarifs bewirkt. Die Verzögerungszeitdauer ist (im Wesentlichen) gleich null, wenn die Änderung des mindestens einen Parktarifparameters eine Senkung des Parktarifs bewirkt.

Gemäß einer weiteren Ausführungsform des anmeldungsgemäßen Parksystems kann die Verzögerungszeitdauer abhängen von der zwischen dem Aufstellort der mindestens einen zweiten Anzeige und dem Aufstellort der mindestens einen ersten Anzeige durch ein Fahrzeug zurückzulegenden Wegstrecke. Die Wegstrecke kann insbesondere der Wegstrecke zwischen dem Zufahrtsanfang bzw. Anfangsbereich des Zufahrtsabschnitts und dem Zufahrtsende bzw. Endbereich des Zufahrtsabschnitts entsprechen. Insbesondere kann aus der Wegstrecke (also nicht der Luftlinie zwischen zweiter Anzeige und Zugangsvorrichtung) geschlossen werden, wieviel Zeit ein Nutzer circa benötigt, um nach der getroffenen Entscheidung, die Parkvorrichtung aufgrund des an der zweiten Anzeige angezeigten Parktarifdatensatzes zu nutzen, die Zugangsvorrichtung bzw. die erste Anzeige zu erreichen. Es sei angemerkt, dass bei einer Mehrzahl an zweiten Anzeigen die Verzögerungszeitdauer vorzugsweise abhängig von der längsten Wegstrecke zwischen einer zweiten Anzeige und der Zugangsvorrichtung bzw. ersten Anzeige sein kann.

Gemäß einer bevorzugten Ausführungsform des anmeldungsgemäßen Parksystems kann die Verzögerungszeitdauer im Wesentlichen der Zeitdauer entsprechen, die ein Fahrzeug zum Zurücklegen der Wegstrecke (höchstens) benötigt. Hierdurch kann mit einer hohen Zuverlässigkeit sichergestellt werden, dass ein Nutzer eine Parkvorrichtung nutzen kann entsprechend einem an der zweiten Anzeige angezeigten Parktarifdatensatz, auch wenn sich während der Fahrt über die genannte Wegstrecke ein oder mehrere Parktarifparameter ändert/n.

Alternativ oder zusätzlich kann gemäß einer weiteren Ausführungsform des anmeldungsgemäßen Parksystems die Verzögerungszeitdauer von einer vorgegebenen ersten Anzahl an Fahrzeugen abhängen, die die Zugangsvorrichtung nach einer Anforderung einer Änderung mindestens eines Parktarifparameters passieren müssen. In diesem Fall ist insbesondere keine feste Verzögerungszeitdauer vorgegeben, sondern die Länge der Verzögerungszeitdauer kann variieren. So kann insbesondere, beispielsweise durch ein Kontrollgerät einer Zugangsanordnung, durch eine Kamera und einer automatischen Bildauswertung oder dergleichen, die Anzahl der Fahrzeuge, die die Zugangsvorrichtung nach einer erfolgten Anforderung zur Änderung mindestens eines Parktarifparameters passieren, erfasst werden. Insbesondere kann grundsätzlich bei einem Parksystem eine Erfassung der einfahrenden (und ausfahrenden) Fahrzeuge erfolgen und diese zum Zählen der Fahrzeuge ab einer erfolgten Anforderung zur Änderung mindestens eines Parktarifparameters verwendet werden.

Das Verzögerungsmodul kann insbesondere eingerichtet sein, dass ein Anzeigen des geänderten Parktarifdatensatzes an der ersten Anzeige erst dann erfolgt, wenn die erfasste Anzahl an Fahrzeugen der vorgegebenen ersten Anzahl an Fahrzeugen entspricht (oder die vorgegebene übersteigt), die die Zugangsvorrichtung insbesondere ab dem Zeitpunkt der Detektion einer Anforderung zur Änderung mindestens eines Parktarifparameters passieren müssen. Die Verzögerungszeitdauer entspricht in diesem Fall der Zeitdauer, die die vorgegebene erste Anzahl an Fahrzeugen benötigt, die Zugangsvorrichtung zu passieren.

Gemäß einer bevorzugten Ausführungsform des anmeldungsgemäßen Parksystems kann die vorgegebene erste Anzahl der Anzahl an (Standard-) Fahrzeugen (z.B. mit einer angenommenen (Standard-)Fahrzeuglänge (z.B. von 4,5 m) und einem angenommenen (Standard-)Abstand zwischen zwei Fahrzeugen (z.B. von 1 m)) entsprechen, die höchstens auf der Wegstrecke zwischen dem Aufstellort der mindestens einen zweiten Anzeige und dem Aufstellort der mindestens einen ersten Anzeige Platz finden. Hierdurch kann mit einer hohen Zuverlässigkeit sichergestellt werden, dass ein Nutzer eine Parkvorrichtung nutzen kann entsprechend einem an der zweiten Anzeige angezeigten Parktarifdatensatz, auch wenn sich während der Fahrt über die genannte Wegstrecke ein oder mehrere Parktarifparameter ändert/n.

Bei einer Ausführungsform kann sowohl eine erste bestimmte und unveränderliche Verzögerungszeitdauer vorgegeben sein, die von der genannten Wegstrecke abhängt, insbesondere von der für die Zurücklegung dieser Wegstrecke durch ein Fahrzeug benötigten Zeitdauer, als auch eine zweite variable Verzögerungszeitdauer vorgesehen sein, die der Zeit entspricht, die eine vorgegebene erste Anzahl an Fahrzeugen benötigt, die Zugangsvorrichtung zu passieren. Beispielsweise kann das Verzögerungsmodul bei Detektion eines Ablaufs einer der ersten Verzögerungszeitdauer und zweiten Verzögerungszeitdauer ein Anzeigen des geänderten Parktarifdatensatzes bewirken. Anders ausgedrückt, erfolgt ein Anzeigen des geänderten Parktarifdatensatzes sobald eine der Verzögerungszeitdauern abgelaufen ist.

Ferner ist festgestellt worden, dass beispielsweise aufgrund einer Störung bei der Zufahrt zu der Zugangsvorrichtung es zu dem Fall kommen kann, dass ein Fahrzeug die erste Anzeige erst dann erreicht, wenn diese bereits einen geänderten, insbesondere erhöhten Tarifdatensatz, anzeigt.

Gemäß einer bevorzugten Ausführungsform kann die Parktarifsteuerungseinrichtung eingerichtet sein zum Erhöhen einer Durchfahrt-Karenzzeit(-dauer) um eine Zusatz-Durchfahrt-Karenzzeit für eine Verlängerungszeitdauer bei einer Anforderung zur Änderung mindestens eines Parktarifparameters. Beispielsweise kann die Parktarifsteuerungseinrichtung mindestens ein Durchfahrt-Karenzzeitanpassungsmodul umfassen, eingerichtet zum Erhöhen einer Durchfahrt-Karenzzeit um eine Zusatz-Durchfahrt-Karenzzeit für eine Verlängerungszeitdauer bei einer Detektion einer Anforderung zur Änderung mindestens eines Parktarifparameters.

Dieser Aspekt ist insbesondere eigenständig erfinderisch. In der Regel ist bei einem Parksystem eine so genannte Durchfahrt-Karenzzeit vorgesehen, in der es einem Nutzer erlaubt ist, die Parkvorrichtung nach einem Einfahren in die Parkvorrichtung ohne Entrichtung eines Geldbetrags unmittelbar wieder zu verlassen. Diese Durchfahrt-Karenzzeit ist gemäß dem Stand der Technik (während des Normalbetriebs) knapp bemessen. Insbesondere ist vorliegend erkannt worden, dass eine Durchfahrt-Karenzzeit nicht ausreichend sein kann, wenn eine Mehrzahl an Fahrzeugen nacheinander aufgrund eines bestimmten Ereignisses, insbesondere einer zuvor beschriebenen Tarifänderung, eine Parkvorrichtung unmittelbar nach dem Einfahren wieder verlassen möchten. Gemäß dieser Ausführungsform wird die Durchfahrt-Karenzzeit für eine Verlängerungszeitdauer verlängert.

Insbesondere kann die Zusatz-Durchfahrt-Karenzzeit eine vorgegebene unveränderliche Zeit sein, beispielsweise x min (z.B. 5 min). Alternativ oder zusätzlich kann die Verlängerungszeitdauer eine vorgegebene unveränderliche Zeitdauer sein (z.B. 15 min). Mit anderen Worten: nach Änderung eines Parktarifparameters wird die Durchfahrt-Karenzzeit um (beispielsweise) 5 min erhöht, und zwar für eine Dauer von (beispielsweise) 15 min. Danach wird die Durchfahrt-Karenzzeit wieder auf ihren ursprünglichen Wert zurückgesetzt.

Gemäß einer bevorzugten Ausführungsform des anmeldungsgemäßen Parksystems kann die Verlängerungszeitdauer von einer vorgegebenen zweiten Anzahl an Fahrzeugen abhängen, die die Zugangsvorrichtung nach einer Anforderung einer Änderung mindestens eines Parktarifparameters passieren müssen. Die zweite Anzahl kann sich von der ersten Anzahl unterscheiden und vorzugsweise größer sein als die erste Anzahl. Bei einer Ausführungsform kann die erste Anzahl auch identisch zu der zweiten Anzahl sein (oder kleiner). In diesem Fall ist insbesondere keine feste Verlängerungszeitdauer vorgegeben, sondern diese kann variieren. Während der Verlängerungszeitdauer ist die Durchfahrt-Karenzzeit für einfahrende Fahrzeuge verlängert, insbesondere um die Zusatz-Durchfahrt-Karenzzeit.

In diesem Fall kann insbesondere, beispielsweise durch ein Kontrollgerät einer Zugangsanordnung, durch eine Kamera mit einer automatischen Bildauswertung oder dergleichen, die Anzahl der Fahrzeuge, die die Zugangsvorrichtung nach einer erfolgten Änderung mindestens eines Parktarifparameters passieren, erfasst werden. Die Durchfahrts-Karenzzeit kann so lange verlängert werden, bis eine bestimmte zweite Anzahl von Fahrzeugen nach einer erfolgten Anforderung zur Änderung mindestens eines Parktarifparameters die Zugangsvorrichtung passiert hat, also die erfasste Anzahl von Fahrzeugen der zweiten Anzahl entspricht (oder diese übersteigt). Der Nutzerkomfort kann noch weiter verbessert werden.

Ferner kann die Parktarifsteuerungseinrichtung eingerichtet sein, ein Anzeigen einer Tarifänderung durch mindestens eine dritte Anzeige (wie eine Anzeige eines mobilen oder stationären Nutzerendgeräts) zu ermöglich. Dies ermöglicht es, dass ein Nutzer sich beispielsweise über das Internet vorab über den augenblicklich gültigen Parktarifdatensatz informieren kann.

Ein weiterer Aspekt der Anmeldung ist ein Verfahren nach Anspruch 9 zum Betreiben eines Parksystems, insbesondere eines zuvor beschriebenen Parksystems. Das Parksystem umfasst mindestens eine Zugangsanordnung mit mindestens einer Zugangsvorrichtung, eingerichtet zur Kontrolle eines Durchfahrens von einem ersten Bereich mit einem Zufahrtsabschnitt in einen weiteren Bereich. Das Verfahren umfasst:
- Anzeigen, durch mindestens eine erste, benachbart zu der der mindestens einen Zugangsvorrichtung angeordnete Anzeige, eines Parktarifdatensatzes,
- Anzeigen, durch mindestens eine zweite, entfernt von der Zugangsvorrichtung und an dem Zufahrtsabschnitt angeordnete zweite Anzeige, des Parktarifdatensatzes,
- Ansteuern der mindestens einen ersten Anzeige und der mindestens einen zweiten Anzeige bei einer Anforderung zur Änderung mindestens eines Parktarifparameters, derart, dass ein Anzeigen des geänderten Parktarifdatensatzes durch die mindestens eine erste Anzeige und die mindestens eine zweite Anzeige bewirkt wird, und
- Verzögern des Anzeigens des geänderten Parktarifdatensatzes durch die mindestens eine erste Anzeige im Vergleich zu dem Anzeigen des geänderten Parktarifdatensatzes durch die mindestens eine zweite Anzeige um eine Verzögerungszeitdauer, wobei die Verzögerungszeitdauer größer null ist, wenn die Änderung des mindestens einen Parktarifparameters eine Erhöhung eines Parktarifs bewirkt und/oder die Verzögerungszeitdauer gleich null ist, wenn die Änderung des mindestens einen Parktarifparameters eine Senkung eines Parktarifs bewirkt.

Ein noch weiterer Aspekt der Anmeldung ist eine Parktarifsteuerungseinrichtung nach Anspruch 10 für ein Parksystem, insbesondere ein zuvor beschriebenes Parksystem. Die Parktarifsteuerungseinrichtung ist eingerichtet zum Ansteuern mindestens einer ersten Anzeige, die benachbart zu einer Zugangsvorrichtung angeordnet ist, und mindestens einer zweiten Anzeige, die entfernt von der Zugangsvorrichtung und an einem Zufahrtsabschnitt der Zugangsvorrichtung angeordnet ist, bei einer Anforderung zur Änderung mindestens eines Parktarifparameters, derart, dass ein Anzeigen des geänderten Parktarifdatensatzes durch die mindestens eine erste Anzeige und die mindestens eine zweite Anzeige bewirkt wird. Die Parktarifsteuerungseinrichtung umfasst mindestens ein Verzögerungsmodul, eingerichtet zum Verzögern des Anzeigens des geänderten Parktarifdatensatzes durch die mindestens eine erste Anzeige im Vergleich zu dem Anzeigen des geänderten Parktarifdatensatzes durch die mindestens eine zweiten Anzeige um eine Verzögerungszeitdauer, wobei die Verzögerungszeitdauer größer null ist, wenn die Änderung des mindestens einen Parktarifparameters eine Erhöhung eines Parktarifs bewirkt und/oder die Verzögerungszeitdauer gleich null ist, wenn die Änderung des mindestens einen Parktarifparameters eine Senkung eines Parktarifs bewirkt.

Die Parktarifsteuerungseinrichtung kann in einer lokalen Rechenvorrichtung der Parkvorrichtung (z.B. Zellenrechner der Parkvorrichtung und/oder Kontrollgerät einer Zugangsvorrichtung) und/oder in einem entfernt angeordneten Backendsystem implementiert sein. Die Parktarifsteuerungseinrichtung kann aus mehreren Modulen gebildet sein, die verteilt angeordnet sein können.

Es sei angemerkt, dass eine Einrichtung, Vorrichtung und/oder Modul gemäß der vorliegenden Anmeldung zumindest teilweise durch Hardware (z.B. Prozessor, Speichermittel etc.) und/oder zumindest teilweise aus Software (ausführbarer Computercode) gebildet sein.

Die Merkmale der Parksysteme, Parktarifsteuerungseinrichtungen und Verfahren sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert, eigenständig erfinderisch sein.

Es gibt nun eine Vielzahl von Möglichkeiten, das anmeldungsgemäße Parksystem, das anmeldungsgemäße Verfahren und die anmeldungsgemäße Parktarifsteuerungseinrichtung auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Parksystems gemäß der vorliegenden Anmeldung mit einem Ausführungsbeispiel einer Parktarifsteuerungseinrichtung gemäß der vorliegenden Anmeldung,
- Fig. 2: eine schematische Ansicht eines weiteren Ausführungsbeispiels eines Parksystems gemäß der vorliegenden Anmeldung mit einem weiteren Ausführungsbeispiel einer Parktarifsteuerungseinrichtung gemäß der vorliegenden Anmeldung, und
- Fig. 3: ein Diagramm eines Ausführungsbeispiels eines Verfahrens gemäß der vorliegenden Anmeldung.

Nachfolgend werden für gleiche Elemente gleiche Bezugszeichen verwendet.

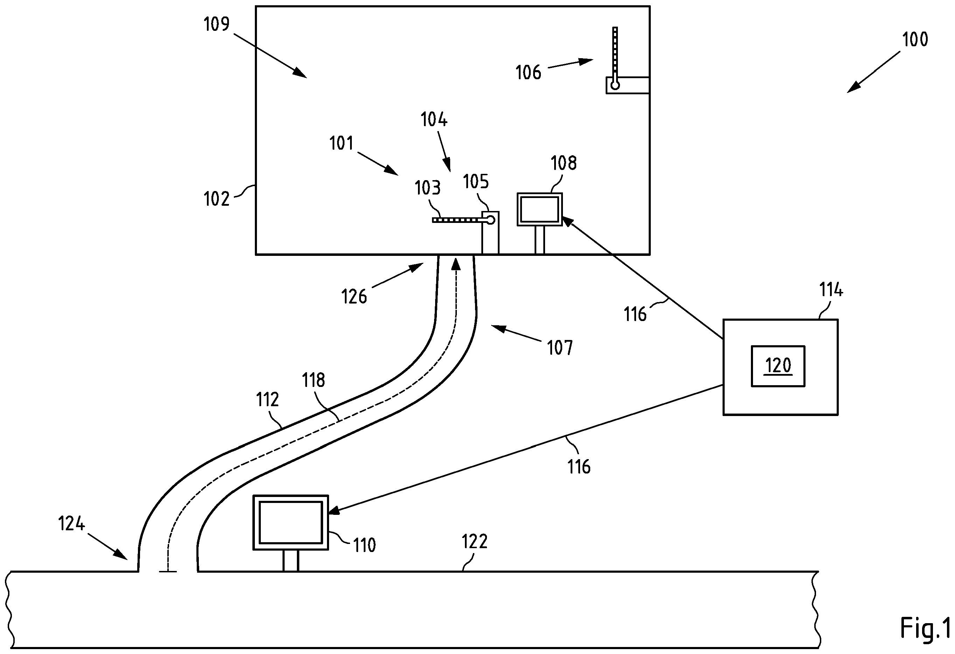

Die Figur 1 zeigt eine schematische Ansicht eines Ausführungsbeispiels eines Parksystems 100 gemäß der vorliegenden Anmeldung mit einem Ausführungsbeispiel einer Parktarifsteuerungseinrichtung 114 gemäß der vorliegenden Anmeldung. Das dargestellte Parksystem 100 kann insbesondere bei einer Parkvorrichtung 102 eingesetzt werden, wie einem Parkplatz oder Parkhaus, der/das insbesondere eine Vielzahl von Stellplätzen aufweist. Das Parksystem 100 ist insbesondere ein Parksystem 100 mit dynamischer Tarifierung.

Ferner umfasst das dargestellte Parksystem 100 eine Zugangsanordnung 101 mit einer Zugangsvorrichtung 104 als Einfahrtszugangsvorrichtung 104. Die Zugangsvorrichtung 104 ist vorliegend als Schranke 104 mit einem an einer Säule 105 angeschlagenen Schrankenbaum 103 gebildet. Es versteht sich, dass andere Formen von Zugangsvorrichtungen eingesetzt werden können.

Die Zugangsvorrichtung 104 ist eingerichtet, das Durchfahren von einem ersten Bereich 107, insbesondere gebildet durch einen Zufahrtsabschnitt 112 (der in Fahrtrichtung eines Fahrzeugs vor der Zugangsvorrichtung 104 angeordnet ist), in einen weiteren Bereich 109 zu steuern. Wenn die Zugangsvorrichtung 104, wie dargestellt, als Einfahrtszugangsvorrichtung 104 gebildet ist, stellt der erste Bereich 107 insbesondere einen nicht kontrollierten Bereich 107 dar und der weitere Bereich 109 einen kontrollierten Bereich 109, insbesondere den Parkbereich 109, dar. Bei einer Ausfahrtszugangsvorrichtung 106 verhält es sich umgekehrt. Es sei angemerkt, dass die Ausfahrtszugangsvorrichtung 106 ähnlich wie die Einfahrtszugangsvorrichtung gebildet sein kann (für eine bessere Übersicht in der Figur 1 wurde jedoch auf eine nähere Beschriftung verzichtet). Es versteht sich, dass zwei oder mehr Einfahrtszugangsvorrichtung und/oder zwei oder mehr Ausfahrtszugangsvorrichtung vorgesehen sein können.

Zum Freigeben des Durchfahrens durch die Zugangsvorrichtung 104 kann ein ansteuerbarer Aktor (z.B. ein Elektromotor) vorgesehen sein. Der Aktor ist insbesondere zum Schwenken des Schrankenbaums 103 abhängig von einem Ansteuersignal eingerichtet.

Wie ferner zu erkennen ist, umfasst das Parksystem 100 eine erste Anzeige 108. Es versteht sich, dass zwei oder mehr erste Anzeigen vorgesehen sein können. Vorliegend umfasst die Zugangsanordnung 102 die erste Anzeige 108. Die erste Anzeige 108 ist insbesondere eine dynamische Anzeige 108, beispielsweise ein veränderliches Display 108. Die erste Anzeige 108 ist eingerichtet, um veränderliche Informationen in Form von Zeichen-, Symbol-, Ziffern- und/oder Bilddaten darzustellen. Die erste Anzeige 108 ist insbesondere eingerichtet, den Parktarifdatensatz anzuzeigen, der augenblicklich beim Einfahren in den Parkbereich 109 gültig ist. Beispielsweise kann mindestens ein Betrag pro Zeiteinheit (z.B. Stunde, Tag etc.) als Parktarifdatensatz angezeigt werden, der für die Nutzung der Parkvorrichtung 102 zu entrichten ist. Beispielsweise kann eine Entrichtung des Betrags vor einem Verlassen der Parkvorrichtung 102 an einem (nicht gezeigten) Kassenautomat erforderlich sein.

Die erste Anzeige 108 ist (unmittelbar) benachbart zu der Zugangsvorrichtung 104 angeordnet, vorliegend insbesondere neben der Säule 105. Insbesondere ist die erste Anzeige 108 derart benachbart zu der Zugangsvorrichtung 104 angeordnet, dass diese für einen Nutzer eines (unmittelbar) vor der Zugangsvorrichtung 104 befindlichen Fahrzeugs, also eines im Endbereich 126 des Zufahrtsabschnitts 112 befindlichen Fahrzeugs, sichtbar ist. Beispielsweise ist die Distanz zwischen der ersten Anzeige 108 und der zugehörigen Zugangsvorrichtung 104 zumindest kleiner als 5 m.

Vorliegend ist ein Zufahrtsabschnitt 112 dargestellt, der zwischen einer (öffentlichen) Straße 122 und der Parkvorrichtung 102 verläuft, insbesondere der Zugangsvorrichtung 104. Der Zufahrtsabschnitt 112 (z.B. zumindest länger als 10 m, vorzugsweise zumindest länger als 20 m) weist einen Anfangsbereich 124, der sich an die Straße 122 anschließt, und einen Endbereich 126 auf, der sich an die Parkvorrichtung 102 bzw. den Parkbereich 109 anschließt. Ein Nutzer, der in den Zufahrtsabschnitt 112 eingefahren ist, kann diesen in der Regel nur durch ein Passieren der Zugangsvorrichtung 104 wieder verlassen.

Zudem ist aus der Figur 1 ersichtlich, dass die erste Anzeige 108, zumindest die auf der ersten Anzeige 108 dargestellten Informationen, nicht von der Straße 122 bzw. dem Anfangsbereich 124 des Zufahrtsabschnitts 112 für einen Nutzer eines Fahrzeugs sichtbar ist.

Daher verfügt das Parksystem 100 über mindestens eine zweite Anzeige 110 (die ähnlich wie die erste Anzeige 108 gebildet sein kann). Die zweite Anzeige 110 ist insbesondere entfernt von der Zugangsvorrichtung 104 und an dem Zufahrtsabschnitt 112 (und an der Straße 122) angeordnet, vorzugsweise an dem Anfangsbereich 124. Die zweite Anzeige 110 zeigt (ebenfalls) den Parktarifdatensatz an, um es insbesondere einem Nutzer zu ermöglichen, sich basierend auf dem angezeigten Parktarifdatensatz für ein Einfahren in die Parkvorrichtung 102 über den Zufahrtsabschnitt 112 zu entscheiden.

Das vorliegend eingesetzte Tarifsystem ist insbesondere ein dynamisches Tarifsystem, bei dem mindestens ein Parktarifparameter dynamisch änderbar ist. Beispielsweise kann mindestens ein Parktarifparameter (insbesondere ein (Geld-)Betrag) abhängig von der augenblicklichen Auslastung bzw. Belegung der Parkvorrichtung 102 änderbar sein. So kann beispielsweise vorgesehen sein, dass je höher die Auslastung der Parkvorrichtung 102 ist, desto höher der Betrag (pro Zeiteinheit) gesetzt wird bzw. je geringer die Auslastung der Parkvorrichtung 102 ist, desto geringer der Betrag (pro Zeiteinheit) gesetzt wird. Ändert sich demnach die Auslastung (beispielsweise um einen bestimmten Wert), kann eine Anforderung zur Änderung mindestens eines Parktarifparameters generiert werden.

Bei einer Anforderung zur Änderung eines Parktarifparameters (beispielsweise aufgrund einer zuvor beschrieben und detektierten Änderung der Auslastung (z.B. Überschreitung/Unterschreitung eines Grenzwerts)) steuert die Parktarifsteuerungseinrichtung 114 die mindestens eine erste Anzeige 108 und die mindestens eine zweite Anzeige 110 an, derart, dass ein Anzeigen des geänderten Parktarifdatensatzes durch die mindestens eine erste Anzeige 108 und die mindestens eine zweite Anzeige 110 bewirkt wird. Insbesondere kann eine Ansteuerung über Kommunikationsverbindungen 116 erfolgen.

Hierbei wird vorausgesetzt, dass ein Parktarifdatensatz für eine Nutzung einer Parkvorrichtung während seiner Anzeige auf der ersten Anzeige 108 gültig ist, also ab dem Zeitpunkt, an dem ein geänderter Parktarifdatensatz an der ersten Anzeige 108 angezeigt wird, bis zu dem Zeitpunkt, an dem ein weiterer geänderter Parktarifdatensatz an der ersten Anzeige 108 angezeigt wird. Mit anderen Worten: die erste Anzeige 108 zeigt vorliegend den augenblicklich gültigen Parktarifdatensatz, der angewandt wird auf einen Parkvorgang, welcher mit dem Einfahren durch die Zugangsvorrichtung 104 begonnen wird.

Anmeldungsgemäß umfasst das Parksystem 100 mindestens ein Verzögerungsmodul 120. Das Verzögerungsmodul 120 ist in dem vorliegenden Ausführungsbeispiel in der Parktarifsteuerungseinrichtung 114 intergiert. Bei anderen Varianten der Anmeldung kann ein Verzögerungsmodul auch in einer ersten Anzeige integriert sein.

Das Verzögerungsmodul 120 ist eingerichtet zum Verzögern des Anzeigens des geänderten Parktarifdatensatzes bei einer Anforderung zum Ändern mindestens eines Parktarifparameters, beispielsweise aufgrund einer oben beschriebenen Detektion der aktuellen Auslastung der Parkvorrichtung 102, durch die mindestens eine erste Anzeige 108 im Vergleich zu dem Anzeigen des geänderten Parktarifdatensatzes durch die mindestens eine zweite Anzeige 110 um eine Verzögerungszeitdauer. Anders ausgedrückt, wird an der zweiten Anzeige 110 bereits der geänderte Parktarifdatensatz angezeigt, während der augenblicklich gültige und von der ersten Anzeige 108 angezeigte Parktarifdatensatz noch der nicht geänderte Parktarifdatensatz ist. Erst nach Ablauf der Verzögerungszeitdauer wird der geänderte Parktarifdatensatz an der ersten Anzeige 108 angezeigt und damit insbesondere auch gültig für die Nutzung der Parkvorrichtung 102.

Die Verzögerungszeitdauer kann abhängen von der zwischen dem Aufstellort der mindestens einen zweiten Anzeige 110 und dem Aufstellort der mindestens einen ersten Anzeige 108 durch ein Fahrzeug zurückzulegenden Wegstrecke 118. Insbesondere kann die Verzögerungszeitdauer im Wesentlichen der Zeitdauer entsprechen, die ein Fahrzeug zum Zurücklegen der Wegstrecke 118 (höchstens) benötigt. Insbesondere kann hierbei eine bestimmte Standardgeschwindigkeit des Fahrzeugs angenommen werden, z.B. 10 km/h. Die Wegstrecke 118 entspricht vorliegend insbesondere der Strecke zwischen dem Anfangsbereich 124 und dem Endbereich 126.

Alternativ oder zusätzlich kann die Verzögerungszeitdauer von einer vorgegebenen ersten Anzahl an Fahrzeugen abhängen, die die Zugangsvorrichtung 104 nach einer detektierten Anforderung für eine Änderung mindestens eines Parktarifparameters passieren müssen. In diesem Fall kann, beispielsweise durch ein (nicht gezeigtes) Kontrollgerät, die Anzahl der Fahrzeuge, die die Zugangsvorrichtung 104 nach einer erfolgten Anforderung zur Änderung mindestens eines Parktarifparameters passieren, erfasst werden.

Das Verzögerungsmodul 120 kann vorliegend insbesondere so eingerichtet sein, dass ein Ansteuern der ersten Anzeige 108 zum Anzeigen des geänderten Parktarifdatensatz erst dann erfolgt, wenn die erfasste Anzahl an Fahrzeugen der vorgegebenen ersten Anzahl an Fahrzeugen entspricht (oder sie übersteigt). Die Verzögerungszeitdauer entspricht in diesem Fall der Zeitdauer, die die vorgegebene erste Anzahl an Fahrzeugen benötigt, die Zugangsvorrichtung 104 zu passieren. Hierbei kann die vorgegebene erste Anzahl der Anzahl an (Standard-)Fahrzeugen (z.B. mit einer angenommenen (Standard-)Fahrzeuglänge (z.B. von 4,5 m) und einem angenommenen (Standard-)Abstand zwischen zwei Fahrzeugen (z.B. von 1 m)) entsprechen, die höchstens auf der Wegstrecke 118 Platz finden.

In dem vorliegenden Ausführungsbeispiel ist die Parktarifsteuerungseinrichtung 114 eine lokale Parktarifsteuerungseinrichtung 114 der Parkvorrichtung 102. Beispielsweise kann die Parktarifsteuerungseinrichtung 114 in einem Zellenrechner der Parkvorrichtung 102 implementiert sein. Denkbar wäre auch eine Implementierung in einem Kontrollgerät.

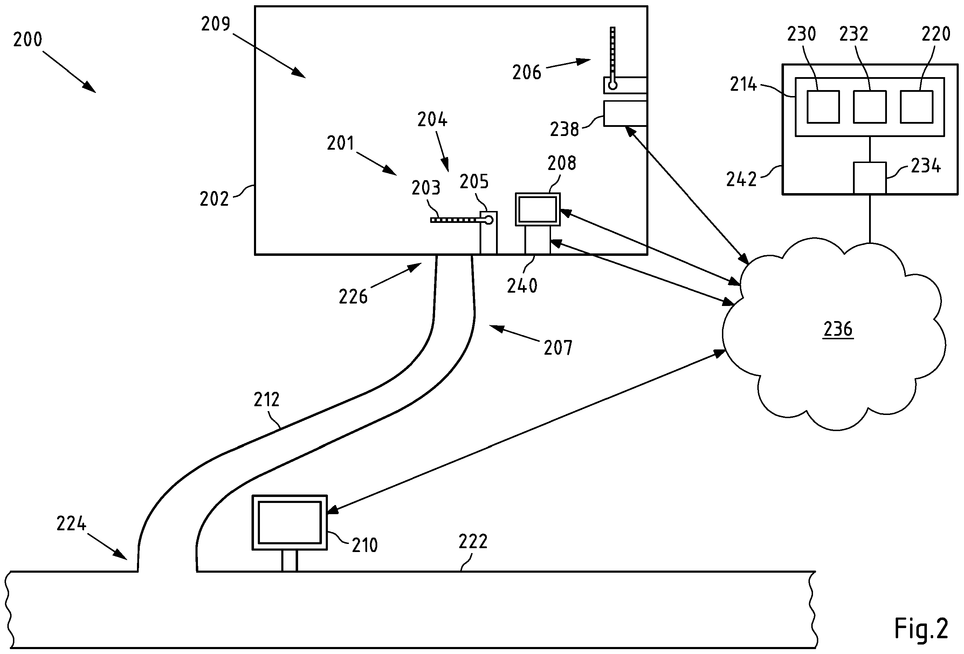

Die Figur 2 zeigt eine schematische Ansicht eines weiteren Ausführungsbeispiels eines Parksystems 200 gemäß der vorliegenden Anmeldung mit einem weiteren Ausführungsbeispiel einer Parktarifsteuerungseinrichtung 214 gemäß der vorliegenden Anmeldung. Zur Vermeidung von Wiederholungen werden nachfolgend im Wesentlichen nur die Unterschiede zu dem Ausführungsbeispiel nach Figur 1 beschrieben. Für die anderen Komponenten des Parksystems 200 wird auf die obigen Ausführungen verwiesen.

Die Zugangsanordnung 201 umfasst vorliegend (neben einer Zugangsvorrichtung 204 und einer ersten Anzeige 208) ein Kontrollgerät 240. Insbesondere ist die erste Anzeige 208 an dem Kontrollgerät 240 angebracht bzw. von diesem umfasst. Das Kontrollgerät 240 kann beispielsweise auf Anforderung ein Ticket entsprechend dem augenblicklich gültigen und auf der ersten Anzeige 208 angezeigten Parktarifdatensatz ausgeben. Dann kann das Kontrollgerät 240 beispielsweise ein Öffnen der Schranke 204 durch eine Ansteuerung des zuvor beschriebenen Aktors bewirken.

Wie ferner zu erkennen ist, ist an der Ausfahrtszugangsvorrichtung 206 eine Validatorvorrichtung 238 vorgesehen. Die Validatorvorrichtung 238 kann zum Erhalten und Prüfen eines Tickets eingerichtet sein. Ergibt die Prüfung, dass das Ticket gültig ist (also insbesondere ein bezahltes Ticket ist), kann die Validatorvorrichtung 238 ein Öffnen der Schranke 206 beispielsweise durch eine Ansteuerung eines zuvor beschriebenen Aktors bewirken.

Ferner umfasst das Parksystem 200 ein entfernt von der Parkvorrichtung 202 angeordnetes Backendsystem 242, beispielsweise gebildet durch einen oder mehrere (verteilte) Server. Die Parktarifsteuerungseinrichtung 214 ist vorliegend in dem Backendsystem 242 implementiert.

Das Backendsystem 242 weist ein Kommunikationsmodul 234 auf, zumindest eingerichtet zum Kommunizieren mit Komponenten 208, 210, 238, 240 des Parksystems 200 über ein Fernkommunikationsnetz 236. Insbesondere kann die Parktarifsteuerungseinrichtung 214 hierüber zumindest die erste Anzeige 208 und die zweite Anzeige 210 ansteuern, zudem das Kontrollgerät 240 und/oder die Validatorvorrichtung 238. Hierbei kann durch ein Ansteuern der ersten Anzeige 208 gleichzeitig ein Ansteuern des Kontrollgeräts 240 erfolgen (oder durch ein Ansteuern des Kontrollgeräts 240 kann gleichzeitig ein Ansteuern der ersten Anzeige 208 erfolgen).

Insbesondere kann zumindest die erste Anzeige 208 und die zweite Anzeige 210 derart angesteuert werden, dass ein Anzeigen des geänderten Parktarifdatensatzes durch die mindestens eine erste Anzeige 208 und die mindestens eine zweite Anzeige 210 bewirkt wird.

Die Anforderung zur Änderung mindestens eines Parktarifparameters kann von einem Parktarifanpassungsmodul 232 generiert werden. Die Parktarifsteuerungseinrichtung 214 kann beispielsweise das Parktarifanpassungsmodul 232 umfassen. Bei anderen Varianten der Anmeldung kann ein Parktarifanpassungsmodul auch in einem lokalen Zellenrechner, einem Kontrollgerät oder dergleichen implementiert sein.

Beispielsweise kann das Parktarifanpassungsmodul 232 basierend auf mindestens einer vorgegebenen Tarifänderungsregel und der erfassten augenblicklichen Auslastung (beispielsweise basierend auf Ein- und Ausfahrtdaten des Kontrollgeräts 240 und/oder der Validatorvorrichtung 238) eine Änderung mindestens eines Parktarifparameters generieren und daraufhin eine entsprechende Ansteuerung bewirken.

Wie zuvor beschrieben wurde, kann bei Erhalt einer entsprechenden Anforderung mindestens ein Verzögerungsmodul 220 das Ansteuern der ersten Anzeige bzw. des Kontrollgeräts 240, umfassend die erste Anzeige 208, verzögern. Bei anderen Varianten der Anmeldung kann ein Verzögerungsmodul auch in einer ersten Anzeige und/oder einem Kontrollgerät integriert sein. In diesem Fall kann beispielsweise bei Erhalt eines Ansteuersignals (umfassend beispielsweise einen geänderten Parktarifdatensatz) von der Parktarifsteuerungseinrichtung das Verzögerungsmodul das Anzeigen des geänderten Parktarifdatensatzes verzögern.

Darüber hinaus ist vorliegend ein Durchfahrt-Karenzzeitanpassungsmodul 230 in dem Parksystem 200 vorgesehen. Beispielsweise kann die Parktarifsteuerungseinrichtung 214 das Durchfahrt-Karenzzeitanpassungsmodul 230 umfassen. Bei anderen Varianten kann ein Durchfahrt-Karenzzeitanpassungsmodul auch in einem lokalen Zellenrechner, einem Kontrollgerät oder dergleichen implementiert sein.

Das Durchfahrt-Karenzzeitanpassungsmodul 230 kann bei Detektion einer generierten Anforderung zur Änderung eines Parktarifparameters eine Durchfahrt-Karenzzeit um eine (bestimmte und insbesondere unveränderliche) Zusatz-Durchfahrt-Karenzzeit für eine Verlängerungszeitdauer verlängern, um Fahrzeugen bzw. deren Nutzern, die während der Verlängerungszeitdauer die Zugangsvorrichtung 204 passieren, eine längere Zeit zur Verfügung zu stellen, um die Parkvorrichtung 202 wieder zu verlassen. Die Verlängerungszeitdauer kann fest vorgegeben sein und/oder von einer zweiten Anzahl an Fahrzeugen abhängen, die die Zugangsvorrichtung 204 nach einer Anforderung einer Änderung mindestens eines Parktarifparameters passieren müssen.

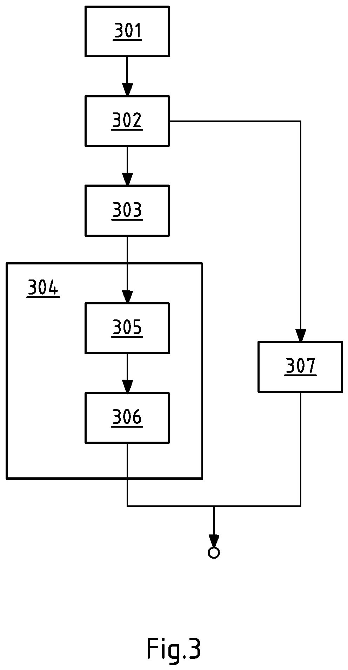

Die Figur 3 zeigt ein Diagramm eines Ausführungsbeispiels eines Verfahrens zum Betreiben eines Parksystems, insbesondere eines Parksystems gemäß Figur 1 und/oder 2.

In einem ersten Schritt 301 erfolgt ein Anzeigen, durch mindestens eine erste, zumindest benachbart zu der Zugangsvorrichtung angeordnete Anzeige, eines Parktarifdatensatzes.

In einem Schritt 302, der zumindest überwiegender Weise parallel zu dem Schritt 301 durchgeführt wird, erfolgt ein Anzeigen, durch mindestens eine zweite, entfernt von der Zugangsvorrichtung und an dem Zufahrtsabschnitt angeordnete zweite Anzeige, des Parktarifdatensatzes.

In einem Schritt 303 kann, wie zuvor beschrieben wurde, eine Anforderung zur Änderung mindestens eines Parktarifparameters generiert werden.

Dann kann in Schritt 304 ein Ansteuern der mindestens einen ersten Anzeige und der mindestens einen zweiten Anzeige bei Detektion einer generierten Anforderung zur Änderung mindestens eines Parktarifparameters erfolgen, derart, dass ein Anzeigen des geänderten Parktarifdatensatzes durch die mindestens eine erste Anzeige und die mindestens eine zweite Anzeige bewirkt wird.

Beispielsweise kann in einem Sub-Schritt 305 die mindestens eine zweite Anzeige unmittelbar angesteuert werden, während in einem Sub-Schritt 306 ein Ansteuern der ersten Anzeige (und/oder des Kontrollgeräts der entsprechenden Zugangsanordnung) um eine Verzögerungszeitdauer verzögert werden kann. Es kann also ein Verzögern des Anzeigens des geänderten Parktarifdatensatzes durch die mindestens eine erste Anzeige im Vergleich zu dem Anzeigen des geänderten Parktarifdatensatzes durch die mindestens eine zweite Anzeige um eine Verzögerungszeitdauer bewirkt werden.

Wie bereits beschrieben wurde, kann dies auch ein (nahezu) gleichzeitiges Ansteuern der ersten und zweiten Anzeigen umfassen und ein Verzögern der Anzeige des geänderten Parktarifdatensatzes auf der ersten Anzeige durch ein Verzögerungsmodul der ersten Anzeige (und/oder des Kontrollgeräts der entsprechenden Zugangsanordnung).

Optional kann in Schritt 307 ein Erhöhen einer Durchfahrt-Karenzzeit um eine Zusatz-Durchfahrt-Karenzzeit bei Detektion einer generierten Anforderung zur Änderung mindestens eines Parktarifparameters für eine Verlängerungszeitdauer erfolgen.

## Patentansprüche

1. Parksystem (100, 200), umfassend:
- mindestens eine Zugangsanordnung (101, 201) mit mindestens einer Zugangsvorrichtung (104, 204), eingerichtet zur Kontrolle eines Durchfahrens von einem ersten Bereich (107, 207) mit einem Zufahrtsabschnitt (112, 212) in einen weiteren Bereich (109, 209),
- mindestens eine erste, benachbart zu der mindestens einen Zugangsvorrichtung (104, 204) angeordnete Anzeige (108, 208), eingerichtet zum Anzeigen eines Parktarifdatensatzes,
- mindestens eine zweite, entfernt von der mindestens einen Zugangsvorrichtung (104, 204) und an dem Zufahrtsabschnitt (112, 212) angeordnete Anzeige (110, 210), eingerichtet zum Anzeigen des Parktarifdatensatzes, und
- mindestens eine Parktarifsteuerungseinrichtung (114, 214), eingerichtet zum Ansteuern der mindestens einen ersten Anzeige (108, 208) und der mindestens einen zweiten Anzeige (110, 210) bei einer Anforderung zur Änderung mindestens eines Parktarifparameters, derart, dass ein Anzeigen des geänderten Parktarifdatensatzes durch die mindestens eine erste Anzeige (108, 208) und die mindestens eine zweite Anzeige (110, 210) bewirkt wird,
**dadurch gekennzeichnet, dass**
- das Parksystem (100, 200) mindestens ein Verzögerungsmodul (120, 220) umfasst, eingerichtet zum Verzögern des Anzeigens des geänderten Parktarifdatensatzes durch die mindestens eine erste Anzeige (108, 208) im Vergleich zu dem Anzeigen des geänderten Parktarifdatensatzes durch die mindestens eine zweite Anzeige (110, 210) um eine Verzögerungszeitdauer, wobei
- die Verzögerungszeitdauer größer null ist, wenn die Änderung des mindestens einen Parktarifparameters eine Erhöhung eines Parktarifs bewirkt,
und/oder
- die Verzögerungszeitdauer gleich null ist, wenn die Änderung des mindestens einen Parktarifparameters eine Senkung eines Parktarifs bewirkt.

2. Parksystem (100, 200) nach Anspruch 1, **dadurch gekennzeichnet, dass**
- die Verzögerungszeitdauer abhängt von der zwischen dem Aufstellort der mindestens einen zweiten Anzeige (110, 210) und dem Aufstellort der mindestens einen ersten Anzeige durch ein Fahrzeug zurückzulegenden Wegstrecke (118).

3. Parksystem (100, 200) nach Anspruch 2, **dadurch gekennzeichnet, dass**
- die Verzögerungszeitdauer im Wesentlichen der Zeitdauer entspricht, die ein Fahrzeug zum Zurücklegen der Wegstrecke (118) benötigt.

4. Parksystem (100, 200) nach einem der vorherigen Ansprüche, **dadurch gekennzeichnet, dass**
- die Verzögerungszeitdauer von einer vorgegebenen ersten Anzahl an Fahrzeugen abhängt, die die Zugangsvorrichtung (104, 204) nach einer Anforderung einer Änderung mindestens eines Parktarifparameters passieren müssen.

5. Parksystem (100, 200) nach Anspruch 4, **dadurch gekennzeichnet, dass**
- die vorgegebene erste Anzahl der Anzahl an Fahrzeugen entspricht, die höchstens Platz finden auf der Wegstrecke (118) zwischen dem Aufstellort der mindestens einen zweiten Anzeige (110, 210) und dem Aufstellort der mindestens einen ersten Anzeige (108, 208).

6. Parksystem (100, 200) nach einem der vorherigen Ansprüche, **dadurch gekennzeichnet, dass**
- die Parktarifsteuerungseinrichtung (114, 214) eingerichtet ist zum Erhöhen einer Durchfahrt-Karenzzeit um eine Zusatz-Durchfahrt-Karenzzeit für eine Verlängerungszeitdauer bei einer Anforderung zur Änderung mindestens eines Parktarifparameters.

7. Parksystem (100, 200) nach Anspruch 6, **dadurch gekennzeichnet, dass**
- die Zusatz-Durchfahrt-Karenzzeit eine vorgegebene unveränderliche Zeit ist, und/oder
- die Verlängerungszeitdauer eine vorgegebene unveränderliche Zeitdauer ist.

8. Parksystem (100, 200) nach Anspruch 6 oder 7, **dadurch gekennzeichnet, dass**
- die Verlängerungszeitdauer von einer vorgegebenen zweiten Anzahl an Fahrzeugen abhängt, die die Zugangsvorrichtung (104, 204) nach einer Anforderung einer Änderung mindestens eines Parktarifparameters passieren müssen.

9. Verfahren zum Betreiben eines Parksystems (100, 200), insbesondere eines Parksystem (100, 200) nach einem der vorherigen Ansprüche, wobei das Parksystem (100, 200) mindestens eine Zugangsanordnung (101, 201) mit mindestens einer Zugangsvorrichtung (104, 204) umfasst, eingerichtet zur Kontrolle eines Durchfahrens von einem ersten Bereich (107, 207) mit einem Zufahrtsabschnitt (112, 212) in einen weiteren Bereich (109, 209), das Verfahren umfassend:
- Anzeigen, durch mindestens eine erste, benachbart zu der mindestens einen Zugangsvorrichtung (104, 204) angeordnete Anzeige (108, 208), eines Parktarifdatensatzes,
- Anzeigen, durch mindestens eine zweite, entfernt von der mindestens einen Zugangsvorrichtung (104, 204) und an dem Zufahrtsabschnitt (112, 212) angeordnete zweite Anzeige (110, 210), des Parktarifdatensatzes,
- Ansteuern der mindestens einen ersten Anzeige (108, 208) und der mindestens einen zweiten Anzeige (110, 210) bei einer Anforderung zur Änderung mindestens eines Parktarifparameters, derart, dass ein Anzeigen des geänderten Parktarifdatensatzes durch die mindestens eine erste Anzeige (108, 208) und die mindestens eine zweite Anzeige (110, 210) bewirkt wird, und
- Verzögern des Anzeigens des geänderten Parktarifdatensatzes durch die mindestens eine erste Anzeige (108, 208) im Vergleich zu dem Anzeigen des geänderten Parktarifdatensatzes durch die mindestens eine zweite Anzeige (110, 210) um eine Verzögerungszeitdauer,
wobei
- die Verzögerungszeitdauer größer null ist, wenn die Änderung des mindestens einen Parktarifparameters eine Erhöhung eines Parktarifs bewirkt,
und/oder
- die Verzögerungszeitdauer gleich null ist, wenn die Änderung des mindestens einen Parktarifparameters eine Senkung eines Parktarifs bewirkt.

10. Parktarifsteuerungseinrichtung (114, 214) für ein Parksystem (100, 200), insbesondere ein Parksystem (100, 200) nach einem der vorherigen Ansprüche 1 bis 8, wobei die Parktarifsteuerungseinrichtung (114, 214) eingerichtet ist zum Ansteuern mindestens einer ersten Anzeige (108, 208), die benachbart zu einer Zugangsvorrichtung (104, 204) angeordnet ist, und mindestens einer zweiten Anzeige (110, 210), die entfernt von der Zugangsvorrichtung (104, 204) und an einem Zufahrtsabschnitt (112, 212) der Zugangsvorrichtung (104, 204) angeordnet ist, bei einer Anforderung zur Änderung mindestens eines Parktarifparameters, derart, dass ein Anzeigen des geänderten Parktarifdatensatzes durch die mindestens eine erste Anzeige (108, 208) und die mindestens eine zweite Anzeige (110, 210) bewirkt wird,
**dadurch gekennzeichnet, dass**
- die Parktarifsteuerungseinrichtung (114, 214) mindestens ein Verzögerungsmodul (120, 220) umfasst, eingerichtet zum Verzögern des Anzeigens des geänderten Parktarifdatensatzes durch die mindestens eine erste Anzeige (108, 208) im Vergleich zu dem Anzeigen des geänderten Parktarifdatensatzes durch die mindestens eine zweiten Anzeige (110, 210) um eine Verzögerungszeitdauer,
wobei
- die Verzögerungszeitdauer größer null ist, wenn die Änderung des mindestens einen Parktarifparameters eine Erhöhung eines Parktarifs bewirkt,
und/oder
- die Verzögerungszeitdauer gleich null ist, wenn die Änderung des mindestens einen Parktarifparameters eine Senkung eines Parktarifs bewirkt.

## Claims

1. A parking system (100, 200) comprising:
- at least one access arrangement (101, 201) comprising at least one access apparatus (104, 204) configured to control a passaging from a first area (107, 207) with an access section (112, 212) into a further area (109, 209),
- at least a first display (108, 208) arranged adjacent to the at least one access apparatus (104, 204) and configured to display a parking tariff data set,
- at least one second display (110, 210) arranged remotely from the at least one access apparatus (104, 204) and at the access section (112, 212) and configured to display the parking tariff data set, and
- at least one parking tariff control means (114, 214) configured to control the at least one first display (108, 208) and the at least one second display (110, 210) upon a request to change at least one parking tariff parameter such that displaying of the changed parking tariff data set by the at least one first display (108, 208) and the at least one second display (110, 210) is delayed, **characterized in that**
- the parking system (100, 200) comprises at least one delay module (120, 220) configured to delay the displaying of the changed parking tariff data set by the at least one first display (108, 208) compared to the displaying of the changed parking tariff data set by the at least one second display (110, 210) by a delay time period, wherein
- the delay time period is greater than zero if the change in at least one parking tariff parameter results in an increase in a parking tariff,
and/or
- the delay time period is zero if the change of at least one parking tariff parameter results in a reduction of a parking tariff.

2. The parking system (100, 200) according to claim 1, **characterized in that**
- the delay time period depends on the route (118) to be traveled by a vehicle between the installation location of the at least one second display (110, 210) and the installation location of the at least one first display.

3. The parking system (100, 200) according to claim 2, **characterized in that**
- the delay time period is substantially equal to the time required by a vehicle to travel the route (118).

4. The parking system (100, 200) according to one of the previous claims, **characterized in that**
- the delay time period depends on a preset first number of vehicles which has to pass through the access apparatus (104, 204) upon a request of a change of at least one parking tariff parameter.

5. The parking system (100, 200) according to claim 5, **characterized in that**
- the preset first number corresponds to the number of vehicles which at most can be accommodated on the path (118) between the installation location of the at least one second display (110, 210) and the installation location of the at least one first display (108, 208).

6. The parking system (100, 200) according to one of the previous claims, **characterized in that**
- the parking tariff control device (114, 214) is configured to increase a transit grace time by an additional transit grace time for an extension time period upon a request to change at least one parking tariff parameter.

7. The parking system (100, 200) according to claim 6, **characterized in that**
- the additional transit grace time is a preset unchangeable period of time, and/or
- the extension time period is a preset unchangeable period of time.

8. The parking system (100, 200) according to claim 6 or 7, **characterized in that**
- the extension time period depends on a preset second number of vehicles which has to pass through the access apparatus (104, 204) upon a request of a change of at least one parking tariff parameter.

9. A method for operating a parking system (100, 200), in particular a parking system (100, 200) according to one of the previous claims, wherein the parking system (100, 200) comprises at least one access arrangement (101, 201) with at least one access apparatus (104, 204), configured to control a passaging from a first area (107, 207) with an access section (112, 212) to a further area (109, 209), the method comprising:
- displaying, by at least one first display (108, 208), arranged adjacent to the at least one access apparatus (104, 204), of a parking tariff data set,
- displaying, by at least one second display (110, 210), arranged remotely from the at least one access apparatus (104, 204) and at the access section (112, 212), of the parking tariff data set,
- controlling the at least one first display (108, 208) and the at least one second display (110, 210) upon a request to change at least one parking tariff parameter such that displaying of the changed parking tariff data set by the at least one first display (108, 208) and the at least one second display (110, 210) is caused, and
- delaying the displaying of the changed parking tariff data set by the at least one first display (108, 208) compared to the displaying of the changed parking tariff data set by the at least one second display (110, 210) for a delay time period, wherein
- the delay time period is greater than zero if the change in at least one parking tariff parameter results in an increase in a parking tariff,
and/or
- the delay time period is zero if the change of at least one parking tariff parameter results in a reduction of a parking tariff.

10. A parking tariff control device (114, 214) for a parking system (100, 200), in particular a parking system (100, 200) according to one of the preceding claims 1 to 8, wherein the parking tariff control device (114, 214) is configured to control at least one first display (108, 208), which is arranged adjacent to an access apparatus (104, 204), and at least one second display (110), 210), which is arranged remotely from the access apparatus (104, 204) and at an access portion (112, 212) of the access apparatus (104, 204), upon a request to change at least one parking tariff parameter such that displaying of the changed parking tariff data set by the at least one first display (108, 208) and the at least one second display (110, 210) is caused,
- wherein the parking tariff control device (114, 214) comprises at least one delay module (120, 220) configured to delay the displaying of the changed parking tariff data set by the at least one first display (108, 208) compared to the displaying of the changed parking tariff data set by the at least one second display (110, 210) by a delay time period, wherein
- the delay time period is greater than zero if the change in at least one parking tariff parameter results in an increase in a parking tariff,
and/or
- the delay time period is zero if the change of at least one parking tariff parameter results in a reduction of a parking tariff.

## Revendications

1. Système de parking (100, 200) comprenant :
- au moins un arrangement d'accès (101, 201) avec au moins un dispositif d'accès (104, 204), configuré pour contrôler un passage d'une première zone (107, 207) avec une section d'accès (112, 212) à une autre zone (109, 209),
- au moins un premier affichage (108, 208), situé avoisinant l'au moins un dispositif d'accès (104, 204), configuré pour afficher un ensemble de données de tarif de parking,
- au moins un deuxième affichage (110, 210) situé à distance de l'au moins un dispositif d'accès (104, 204) et sur la section d'accès (112, 212), configuré pour afficher l'ensemble de données de tarif de parking, et
- au moins un dispositif de commande de tarif de parking (114, 214) configuré pour commander l'au moins un premier affichage (108, 208) et l'au moins un deuxième affichage (110, 210) lors d'une demande de modification d'au moins un paramètre de tarif de parking, de telle sorte qu'un affichage de l'ensemble de données de tarif de parking modifié est effectué par l'au moins un premier affichage (108, 208) et l'au moins un deuxième affichage (110, 210), **caractérisé en ce que**
- le système de parking (100, 200) comprend au moins un module de temporisation (120, 220) configuré pour retarder, d'une durée de temporisation, l'affichage de l'ensemble de données de tarif de parking modifié par l'au moins un premier affichage (108, 208) par rapport à l'affichage de l'ensemble de données de tarif de parking modifié par l'au moins un deuxième affichage (110, 210), où
- la durée de temporisation est supérieure à zéro lorsque la modification de l'au moins un paramètre de tarif de parking entraîne une augmentation d'un tarif de parking,
et/ou
- la durée de temporisation est égale à zéro lorsque la modification de l'au moins un paramètre de tarif de parking entraîne une diminution d'un tarif de parking.

2. Système de parking (100, 200) selon la revendication 1, **caractérisé en ce que**
- la durée de temporisation dépend de la distance (118) à parcourir par un véhicule entre le lieu d'installation de l'au moins un deuxième affichage (110, 210) et le lieu d'installation de l'au moins un premier affichage.

3. Système de parking (100, 200) selon la revendication 2, **caractérisé en ce que**
- la durée de temporisation correspond essentiellement à la durée nécessaire à un véhicule pour parcourir la distance (118).

4. Système de parking (100, 200) selon l'une des revendications précédentes, **caractérisé en ce que**
- la durée de temporisation dépend d'un premier nombre prédéterminé de véhicules qui doivent passer par le dispositif d'accès (104, 204) après une demande de modification d'au moins un paramètre de tarif de parking.

5. Système de parking (100, 200) selon la revendication 4, **caractérisé en ce que**
- le premier nombre prédéterminé correspond au nombre de véhicules qui peuvent au maximum être localisés sur la distance (118) entre le lieu d'installation de l'au moins un deuxième indicateur (110, 210) et le lieu d'installation de l'au moins un premier indicateur (108, 208).

6. Système de parking (100, 200) selon l'une des revendications précédentes, **caractérisé en ce que**
- le dispositif de commande de tarif de parking (114, 214) est configuré pour augmenter, d'un temps d'attente de passage supplémentaire, un temps de grâce de passage pour une période de prolongation lors d'une demande de modification d'au moins un paramètre de tarif de parking.

7. Système de parking (100, 200) selon la revendication 6, **caractérisé en ce que**
- la durée d'attente de passage supplémentaire est une durée invariable prédéterminée, et/ou
- la durée de prolongation est une durée prédéterminée non modifiable.

8. Système de parking (100, 200) selon la revendication 6 ou 7, **caractérisé en ce que**
- la durée de prolongation dépend d'un deuxième nombre prédéterminé de véhicules qui doivent passer par le dispositif d'accès (104, 204) après une demande de modification d'au moins un paramètre de tarif de parking.

9. Procédé d'exploitation d'un système de parking (100, 200), en particulier d'un système de parking (100, 200) selon l'une des revendications précédentes, le système de parking (100, 200) comprenant au moins un arrangement d'accès (101, 201) comprenant au moins un dispositif d'accès (104, 204) configuré pour contrôler un passage d'une première zone (107, 207) avec une section d'accès (112, 212) à une autre zone (109, 209), le procédé comprenant :
- afficher, par au moins un premier affichage (108, 208) situé avoisinant l'au moins un du dispositif d'accès (104, 204), d'un ensemble de données de tarif de parking,
- afficher, par au moins un deuxième affichage (110, 210), situé à distance du dispositif d'accès (104, 204) et sur la section d'accès (112, 212), l'ensemble de données de tarif de parking,
- commander l'au moins un premier affichage (108, 208) et l'au moins un deuxième affichage (110, 210) lors d'une demande de modification d'au moins un paramètre de tarif de parking, de telle sorte qu'un affichage de l'ensemble de données de tarif de parking modifié est effectué par l'au moins un premier affichage (108, 208) et l'au moins un deuxième affichage (110, 210), et
- retarder, d'une durée de temporisation, l'affichage de l'ensemble de données de tarif de parking modifié par l'au moins un premier affichage (108, 208) par rapport à l'affichage de l'ensemble de données de tarif de parking modifié par le au moins un deuxième affichage (110, 210), où
- la durée de temporisation est supérieure à zéro lorsque la modification de l'au moins un paramètre de tarif de parking entraîne une augmentation d'un tarif de parking,
et/ou
- la durée de temporisation est égale à zéro lorsque la modification de l'au moins un paramètre de tarif de parking entraîne une diminution d'un tarif de parking.

10. Dispositif de commande de tarif de parking (114, 214) pour un système de parking (100, 200), en particulier un système de parking (100, 200) selon l'une des revendications précédentes 1 à 8, où le dispositif de commande de tarif de parking (114, 214) est configuré pour commander au moins un premier affichage (108, 208) disposé avoisinant l'un dispositif d'accès (104, 204) et au moins un deuxième affichage (110, 210) situé à distance du dispositif d'accès (104, 204) et sur une section d'accès (112, 212) du dispositif d'accès (104, 204), lors d'une demande de modification d'au moins un paramètre de tarif de parking, de sorte qu'un affichage de l'ensemble de données de tarif de parking modifié est effectué par l'au moins un premier affichage (108, 208) et l'au moins un deuxième affichage (110, 210),
**caractérisé en ce que**
- le dispositif de commande de tarif de parking (114, 214) comprend au moins un module de temporisation (120, 220) configuré pour retarder, d'une durée de temporisation, l'affichage de l'ensemble de données de tarif de parking modifié par l'au moins un premier affichage (108, 208) par rapport à l'affichage de l'ensemble de données de tarif de parking modifié par l'au moins un deuxième affichage (110, 210), où
- la durée de temporisation est supérieure à zéro lorsque la modification de l'au moins un paramètre de tarif de parking entraîne une augmentation d'un tarif de parking,
et/ou
- la durée de temporisation est égale à zéro lorsque la modification de l'au moins un paramètre de tarif de parking entraîne une diminution d'un tarif de parking.
